# EUROPÄISCHE PATENTSCHRIFT

(11) **EP 0 720 021 B1**
(45) Veröffentlichungstag und Bekanntmachung des Hinweises auf die Patenterteilung: **21.05.1997**
(21) Anmeldenummer: 95103312.5
(22) Anmeldetag: 08.03.1995
(51) Int. Cl.: G01P 13/02, G01P 3/48

(54) **Induktiver Sensor zum Messen der Drehzahl oder Drehrichtung einer Welle**
Inductive sensor for measuring the speed or the direction of rotation of a shaft
Capteur inductif pour mesurer la vitesse ou la direction de rotation d'un arbre

(30) Priorität: 28.12.1994 DE 4446918
(43) Veröffentlichungstag der Anmeldung: 03.07.1996
(73) Patentinhaber: SPANNER-POLLUX GmbH, D-67063 Ludwigshafen (DE)
(72) Erfinder: Schäfer, Burghard, Dipl.-Ing., D-67112 Mutterstadt (DE)
(74) Vertreter: Patentanwälte Möll und Bitterich

(56) Entgegenhaltungen:
- EP-A- 0 370 174
- EP-A- 0 408 084
- DE-C- 4 301 966

## Beschreibung

Die Erfindung betrifft induktive Sensoren zum exakten Messen der Drehzahl einer Welle gemäß dem Oberbegriff des Anspruchs 1.

Aus der EP-A-0 370 174 ist ein induktiver Umdrehungssensor für Flügelrad-Durchflußmesser bekannt, mit dessen Hilfe Drehzahl und Drehrichtung eines Flügelrad-Durchflußmessers praktisch rückwirkungsfrei erfaßt werden können. Um die Rotationsachse des Flügelrades sind konzentrisch drei Spulen angeordnet, die mit Hilfe je eines Kondensators zu Schwingkreisen ergänzt sind. Diese werden gleichzeitig intermittierend erregt. Am Flügelrad ist ein Dämpfungsblech befestigt, das beim Vorbeirotieren an einer Spule den Dämpfungsgrad der Spule und damit die Resonanzfrequenz des entsprechenden LC-Schwingkreises verändert. Die gedämpft abklingenden Sinus-Resonanzspannungen der drei LC-Schwingkreise werden mittels Schmitt-Triggern digitalisiert und einer Auswerteschaltung zugeführt, welche aus der Differenz der Frequenzen der gedämpften und ungedämpften Spulen die Drehzahl und Drehrichtung des Flügelrades bestimmt. Dieser bekannte Umdrehungssensor arbeitet jedoch nur dann exakt, wenn die drei LC-Schwingkreise auf exakt gleiche Werte abgeglichen sind, da jeder Schwingkreis als Meßnormal wirkt. Dieser Abgleich erschwert die Fertigung. Falls die Bauelemente nicht vorgealtert werden, geht der Abgleich im Laufe des Betriebs verloren, woraufhin der Umdrehungssensor falsche Werte abgibt, ohne daß dies erkannt werden kann.

Die EP-A-0 408 084 offenbart einen weiteren Umdrehungssensor. Dieser arbeitet sogar mit vier Spulen im Wirkungsbereich des mit der Welle mitrotierenden Dämpfungsblechs, die zu LC-Schwingkreisen ergänzt sind. Auch hier wirkt jeder Schwingkreis als Meßnormal, so daß alle vier LC-Schwingkreise auf gleiche Werte abgeglichen werden müssen, wodurch die Fertigung noch umständlicher und die Gefahr von Fehlmessungen infolge von Bauteildriften noch größer ist.

Der vorliegenden Erfindung liegt die Aufgabe zugrunde, einen nur wenig Energie benötigenden induktiven Umdrehungssensor zu schaffen, mit dessen Hilfe die Drehzahl einer mit einem Dämpfungsblech ausgerüsteten Welle rückwirkungsfrei erfaßt werden kann, der keine besonderen Anforderungen an Toleranzen, Temperaturkoeffizienten und Alterungsdriften seiner elektronischen Bauteile stellt, der ohne werksseitigen Abgleich einwandfrei funktioniert und der mit preiswerten integrierten Schaltkreisen realisiert werden kann.

Diese Aufgabe wird gelöst durch einen induktiven Sensor mit den Merkmalen des Anspruchs 1.

Der wesentliche Vorteil des erfindungsgemäßen Sensors liegt darin, daß nur eine einzige Meßreferenz Verwendung findet, und zwar vorzugsweise ein ultraschallfrequenter Quarzoszillator, der sowohl hochgenau als auch energiesparend arbeitet, und zwar über lange Zeit.

Die eigentlichen Meßpulse werden erzeugt von einem höchstfrequenten Meßoszillator, dessen Frequenz weder bekannt noch langzeitstabil sein muß. Die Periodendauer der Meßpulse ist angepaßt an die gewünschte minimale zeitliche Auflösung der Sensorschaltung.

Aufgrund dieser minimalen Anforderungen läßt sich der Meßoszillator vorzugsweise als auf einem Halbleiterchip integrierter Ringoszillator realisieren. Diese Ringoszillatoren arbeiten energiesparend; ihr wesentlicher Vorteil ist jedoch, daß sie sich mit Hilfe eines UND-Gatters ein- und ausschalten lassen und daß sie ohne merkliche Verzögerung anschwingen.

Dank der adaptiven Maßnahmen, die im wesentlichen nur auf einfachen Vergleichen zwischen aktuellen Zählerstandswerten und in Registern hinterlegten Speicherwerten beruhen, läßt sich die Schaltung ohne Mikroprozessor aufbauen. Gleichwohl ist es möglich, die Driften des Meßoszillators und sämtlicher Schaltungselemente einschließlich der die Schaltung speisenden Batterie während der gesamten Betriebsdauer zu erkennen und automatisch auszugleichen.

Gemäß einer Weiterbildung der Erfindung, mit deren Hilfe nicht nur die Drehzahl, sondern auch die Drehrichtung der Welle erfaßt werden kann, ist eine zweite Spule bzw. ein entsprechender LC-Schwingkreis vorgesehen, wobei sich das Dämpfungsblech über einen Winkel von 180 Grad erstreckt, während die beiden Spulen einen gegenseitigen Winkelabstand ungleich 180 Grad besitzen. Die Verarbeitung der Sinus-Resonanzschwingungen des zweiten LC-Schwingkreises erfolgt analog der Verarbeitung der Sinus-Resonanzschwingungen des ersten LC-Schwingkreises. Der Sensorschaltung ist jetzt ein Dekoder nachgeschaltet, der aus der Abfolge der Kombinationen der Dämpfungswerte X1 und X2 auch die Drehrichtung der Welle ermittelt.

Zur Erhöhung der Redundanz kann gemäß einer bevorzugten Ausgestaltung der Erfindung auch eine dritte Spule bzw. ein dritter LC-Schwingkreis vorgesehen werden, wobei alle drei Spulen symmetrisch um die Welle herum angeordnet sind. Ein zusätzlicher Fehlerdetektor erkennt das Ausbleiben der Rechteckpulse des ersten oder zweiten LC-Schwingkreises, beispielsweise infolge von Kurzschluß oder Leitungsunterbrechung, worauf ein Multiplexer den dritten LC-Schwingkreis anstelle des defekten LC-Schwingkreises in die Meßschaltung einschaltet.

Um zu verhindern, daß die adaptive Regelung den schaltungsbedingten Regelbereich verläßt, werden zusätzlich sowohl die Minimumwerte als auch die Maximumwerte daraufhin überprüft, ob sie eine Minimumfehlergrenze bzw. eine Maximumfehlergrenze überschreiten. Falls ja, werden die gespeicherten Minimum- und Maximumwerte zurückgesetzt und ein neuer Meßzyklus gestartet, ohne daß die Dämpfungswerte aktualisiert werden.

Da es ein wesentliches Merkmal der vorliegenden Erfindung ist, daß der Meßoszillator nur kurzzeitstabil sein muß, nicht langzeitstabil, muß dafür Sorge getragen werden, daß die Frequenzdrift der Meßpulse, insbesondere bedingt durch Temperatur- und Spannungsänderungen, erkannt und ausgeglichen wird. Hierzu werden jeweils die aufeinanderfolgend ermittelten Referenzzählerstände miteinander verglichen. Wird dabei eine Abweichung festgestellt, wird aus der Differenz ein Frequenzdriftwert ermittelt. Sobald dieser eine schaltungstypische Driftschwelle überschreitet, was gleichbedeutend ist mit einer größeren Frequenzabweichung, werden die aktuellen Zählwerte der beiden LC-Schwingkreise als Minimum- und Maximumwerte gespeichert und eine neue Messung gestartet, ohne daß die Dämpfungswerte aktualisiert werden.

Hauptaufgabe der Erfindung ist es festzustellen, mit welcher Drehzahl und mit welcher Drehrichtung sich eine Welle dreht. Handelt es sich dabei um die Welle eines Flügelrad-Durchflußmessers, so bleibt das Flügelrad oftmals sehr lange stehen, wenn kein Wasser entnommen wird. Um auch in einem solchen Fall Änderungen der Meßfrequenz und/oder der Werte der Bauelemente des induktiven Sensors einschließlich der Batteriespannung erfassen zu können, ist zusätzlich eine Zeitüberwachungsschaltung vorgesehen, die jedes Mal gestartet wird, wenn wenigstens einer der beiden Dämpfungswerte aktualisiert wird, bei der jedoch ein Timeout auftritt, wenn die Zeitspanne zwischen zwei derartigen Aktualisierungen zu lang wird. In diesem Fall werden die aktuellen Zählerstände als Minimum- und Maximumwert gespeichert und eine neue Messung gestartet.

Anhand der Zeichnung soll die Erfindung in Form von Ausführungsbeispielen näher erläutert werden. Es zeigen
- Fig. 1: ein Blockschaltbild eines mit Redundanz versehenen induktiven Sensors zur Ermittlung von Drehzahl und Drehrichtung einer Welle,
- Fig. 2: ein Pulsdiagramm zur Erläuterung des erfindungsgemäßen Meßprinzips,
- Fig. 3: ein Flußdiagramm der adaptiven Meßschaltung und
- Fig. 4: ein Flußdiagramm der Frequenzdrifterkennung.

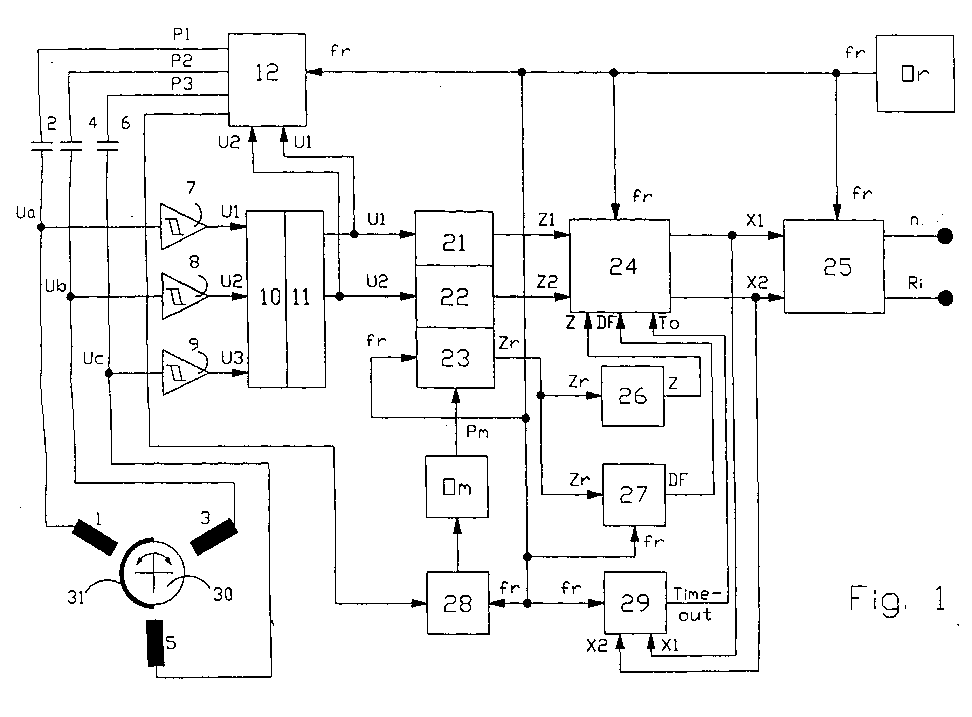

Fig. 1 zeigt eine Welle 30, beispielsweise die Welle eines Flügelrad-Durchflußmessers für flüssige Medien, deren Drehzahl n und Drehrichtung Ri rückwirkungsfrei und exakt gemessen werden sollen. Die Welle 30 ist mit einem Dämpfungsblech 31 belegt, welches sich über einen Winkel von 180 Grad erstreckt.

Symmetrisch zur Welle 30 sind drei Spulen 1, 3, 5 positioniert, die mit je einem Kondensator 2, 4, 6 zu einem LC-Schwingkreis ergänzt sind. Ein Pulsgenerator 12 erzeugt Anregungspulse P1, P2, P3 definierter Länge, mit deren Hilfe die LC-Schwingkreise 1, 2; 3, 4; 5, 6 zu gedämpften Sinus-Resonanzschwingungen Ua, Ub, Uc angeregt werden.

Die Sinus-Resonanzschwingungen Ua, Ub, Uc werden mittels je eines Schmitt-Triggers 7, 8, 9 zu Digitalpulsen U1, U2, U3 umgewandelt und gelangen in einen Fehlerdetektor 10. Dessen Aufgabe ist es festzustellen, ob einer der LC-Schwingkreise ausgefallen ist, beispielsweise infolge von Kurzschluß. In diesem Fall wird ein nachgeordneter Multiplexer 11 aktiviert, der den defekten LC-Schwingkreis abschaltet und die beiden verbleibenden, intakten LC-Schwingkreise bzw. die von diesen erzeugten Digitalpulse U1, U2 oder U3 auf die nachfolgende Meßschaltung schaltet.

Um den Anregungspulsen P1, P2, P3 eine definierte Länge zu geben, werden die Digitalpulse U1, U2 auch an den Pulsgenerator 12 geführt. Auf diese Weise kann die Länge der Anregungspulse P1, P2 auf beispielsweise 1/4 der Periodendauer der Resonanzfrequenz f1, f2 des jeweiligen LC-Schwingkreises 1, 2; 3, 4 geregelt werden, unabhängig davon, welchen Wert die Resonanzfrequenz gerade hat. Diese Resonanzfrequenzen f1, f2 sind abhängig von den Werten der Spulen und Kondensatoren und insbesondere von der Position des Dämpfungsblechs 31 zu den drei Spulen 1, 3, 5.

Des weiteren erkennt man einen Meßoszillator Om. Dieser ist vorzugsweise als auf einem Halbleiterchip integrierter Ringoszillator realisiert. Derartige Ringoszillatoren sind bekannt. Sie lassen sich in einfachster Weise mit Hilfe eines UND-Gatters ein- und ausschalten, schwingen ohne merkbare Verzögerung voll an und verbrauchen nur wenig elektrische Energie. Besitzt der Meßoszillator Om beispielsweise eine Meßfrequenz von 200 MHz, können Messungen bis herunter zu 5 Nanosekunden aufgelöst werden. Derartige Ringoszillatoren sind zwar relativ kurzzeitstabil, jedoch nicht langzeitstabil, da die Frequenz mit der Temperatur des Halbleiterchips und der Höhe der Versorgungsspannung variiert.

Als Meßnormal der Sensorschaltung ist ein hochgenauer, langzeitstabiler, quarzgesteuerter, energiesparend arbeitender Referenzoszillator Or vorgesehen. Dieser erzeugt beispielsweise seine Referenzfrequenz im Ultraschallbereich bei 32 kHz. Derartige Oszillatoren werden unter anderem in quarzgesteuerten Armbanduhren verwendet, wo sie über Jahre hinweg mit ein und derselben Batterie ihren Dienst mit hoher Genauigkeit verrichten.

Um die momentane Frequenz der LC-Schwingkreise 1, 2; 3, 4; 5, 6 messen zu können, sind zwei Zähler 21, 22 vorgesehen. Diese messen über eine Zeitdauer von K (K = 1, 2, 3...) Digitalpulsen U1, U2 die Meßpulse Pm des Meßoszillators Om ein. Am Ende eines Meßvorgangs weisen sie die Zählwerte Z1, Z2 auf. Wären die LC-Schwingkreise exakt aufeinander abgeglichen, würde der LC-Schwingkreis mit der höheren Frequenz, hervorgerufen durch die Anwesenheit des Dämpfungsblechs 31, einen niedrigeren Zählwert aufweisen als der andere Zähler. Da bei der vorliegenden Schaltung die LC-Schwingkreise jedoch nicht abgeglichen werden, und da sich die LC-Schwingkreise im Laufe der Betriebszeit ändern, lassen sich aus den Zählwerten Z1 und Z2 allein keine Aussagen machen.

Aus diesen Grunde werden die Zählwerte Z1, Z2 in einer Dämpfungsmeßschaltung 24 weiterverarbeitet. Dort werden die aktuellen Zählwerte mit gespeicherten Zählwerten, den sogenannten Minimum- und Maximumwerten, verglichen. Auf diese Weise kann festgestellt werden, ob sich seit der letzten Messung die Frequenz eines LC-Schwingkreises erhöht oder erniedrigt hat, d. h. ob sich das Dämpfungsblech 31 der einen Spule 1, 3, 5 genähert oder von der anderen Spule 5, 3, 1 entfernt hat, d. h. ob und wie weit sich seit der letzten Messung die Welle 30 gedreht hat.

Es versteht sich, daß die Häufigkeit dieser Meßvorgänge das Abtasttheorem erfüllen muß.

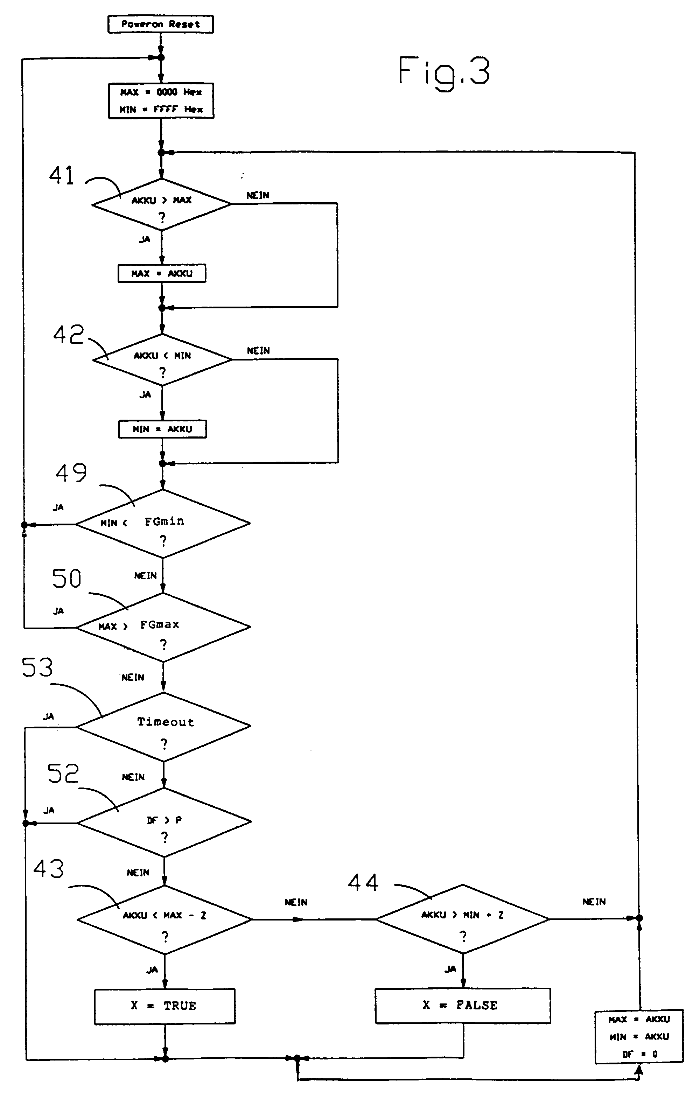

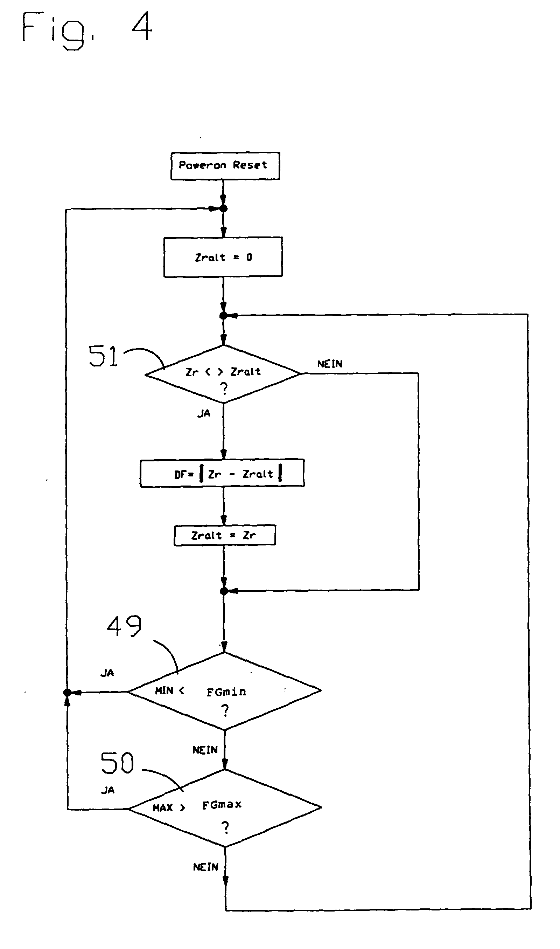

Da eine Änderung der Zählwerte Z1, Z2 zwischen zwei Messungen nicht nur durch die geänderte Position des Dämpfungsblechs 31 hervorgerufen sein kann, sondern auch durch eine Frequenzdrift des Meßoszillators Om, muß auch dessen Frequenz überwacht werden. Bei größeren, die Genauigkeit der Meßschaltung übersteigenden Frequenzdriften muß die Auswertung der Messungen adaptiv korrigiert werden. Zu diesem Zweck ist ein dritter Zähler 23 vorgesehen, der für die Dauer einer von der Referenzfrequenz fr des Referenzoszillators Or abgeleiteten hochgenauen Zeitspanne ebenfalls die Meßpulse Pm einzählt und am Ende den Zählwert Zr ausweist. In einem nachgeschalteten Frequenzdriftdecoder 27 werden jeweils aufeinanderfolgend ermittelte Referenzzählwerte Zr miteinander verglichen. Tritt eine Differenz auf und übersteigt diese eine bestimmte anlagentypische Schwelle, wird ein Frequenzdriftwert DF ausgegeben, der den adaptiven Teil der Dämpfungsmeßschaltung 24 korrigierend beeinflußt, was anhand der Fig. 3 und 4 noch näher erläutert werden soll.

Ebenfalls vorgesehen ist ein Schwellwertgenerator 26, der aus dem Referenzzählerstandswert Zr anhand einer in ihm gespeicherten Tabelle einen Referenzschwellwert Z erzeugt, der ebenfalls die Dämpfungsmeßschaltung 24 adaptiv beeinflußt.

Dem Meßoszillator Om ist eine Verzögerungsschaltung 28 vorgeschaltet. Diese wird vom Pulsgenerator 12 gestartet und von der Referenzfrequenz fr gesteuert. Die Verzögerungsschaltung 28 sorgt dafür, daß die Meßpulse Pm mit einer definierten Verzögerung zu den Anregungspulsen P1, P2, P3 eingeschaltet werden, so daß der Meßoszillator Om nur während eines Teils der K Digitalpulse U1, U2 schwingt und Strom verbraucht. Die Genauigkeit der Messung leidet unter dieser Energiesparmaßnahme nicht, da die Verzögerungszeit von dem einzigen Referenznormal der Schaltung, dem Referenzoszillator Or, abgeleitet ist.

Am Ausgang der Dämpfungsmeßschaltung 24 erscheinen binäre Dämpfungswerte X1, X2, die beispielsweise den Wert "TRUE" annehmen, wenn sich das Dämpfungsblech 31 vor der betreffenden Spule 1, 3 oder 5 befindet, und den Wert "FALSE", wenn sich das Dämpfungsblech 31 nicht vor der entsprechenden Spule 1, 3 oder 5 befindet. Dabei ist Sorge dafür getragen, daß sich die Dämpfungswerte X1, X2 dann nicht ändern, wenn sich das Dämpfungsblech 31 beispielsweise nur halb vor der entsprechenden Spule 1, 3 oder 5 befindet. Dies wird noch anhand der Fig. 3 näher erläutert.

Der Dämpfungsmeßschaltung 24 ist schließlich ein Dekoder 25 nachgeschaltet, der aus der Art und Weise, wie sich die Kombinationen der binären Dämpfungswerte X1, X2 von Messung zu Messung ändern, die Drehrichtung Ri und die Drehzahl n ermittelt.

Da es in der Praxis immer wieder vorkommen kann, daß sich die Welle 30 über längere Zeit nicht dreht, so daß sich auch die Dämpfungswerte X1, X2 nicht ändern, ist eine Zeitüberwachungsschaltung 29 vorgesehen, die jedesmal neu gestartet wird, wenn sich einer der Dämpfungswerte X1, X2 ändert. Tritt ein Timeout auf, wird ein entsprechendes Signal an die Dämpfungsmeßschaltung 24 übermittelt, welches dort einen Adaptionsvorgang auslöst, mit dessen Hilfe in der Zwischenzeit etwa eingetretene Änderungen der Meßfrequenz und der Bauelementewerte erkannt und adaptiv berücksichtigt werden, so daß jede Messung mit korrekten und aktuellen Meß- und Speicherwerten durchgeführt wird.

Es versteht sich, daß alle die Meßvorgänge, die sich mit der möglichen Korrektur von Frequenz- und Bauelementedriften befassen, erheblich seltener durchgeführt werden als die Messungen, mit deren Hilfe die aktuellen Resonanzfrequenzen f1, f2, f3 der LC-Schwingkreise ermittelt wird.

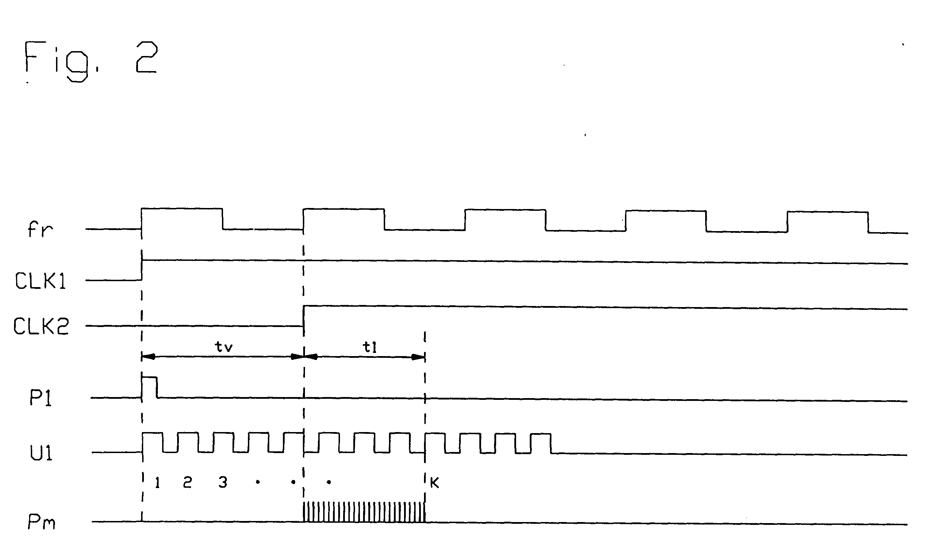

Fig. 2 zeigt ein Pulsdiagramm zur Erläuterung des Meßprinzips.

In der obersten Zeile ist der Referenztakt fr des Referenzoszillators Or zu erkennen. Davon ist abgeleitet der in der zweiten Zeile dargestellte Grundtakt Clk1. In der dritten Zeile ist ein Zweittakt Clk2 dargestellt, abgeleitet aus dem Grundtakt Clk1 und dem Referenztakt fr. Die Differenz zwischen den ansteigenden Flanken von Grundtakt Clk1 und Zweittakt Clk2 definiert eine exakte Verzögerungszeit tv.

Die vierte Zeile zeigt den Anregungspuls P1 für den ersten LC-Schwingkreis 1, 2.

Die fünfte Zeile zeigt die am Ausgang des Schmitt-Triggers 7 erscheinenden Digitalpulse U1, von denen die ersten K (K = 1, 2, 3...) für die Messung der Resonanzfrequenz f1 des LC-Schwingkreises 1, 2 ausgewertet werden.

In der untersten Zeile sind dargestellt die Meßpulse Pm. Diese werden jedoch nicht über die volle Dauer der K Digitalpulse U1 gezählt; vielmehr wird der Meßoszillator Om erst nach Ablauf der Verzögerungszeit tv gestartet, so daß die Zählung der Meßpulse Pm nur während der relativen kurzen Meßzeit t1 erfolgt. Dies ermöglicht die Verwendung einfacherer Frequenzzähler und verringert die Belastung der Batterie.

Fig. 3 zeigt ein Flußdiagramm, anhand dessen die in der Dämpfungsmeßschaltung 24 ablaufenden Vorgänge erläutert werden sollen.

Die Dämpfungsmeßschaltung 24 besitzt Register, in denen Maximumwerte Max und Minimumwerte Min, Max-Fehlergrenzen FGmax und Minimum-Fehlergrenzen FGmin, adaptive MAX-Fehlergrenzen und adaptive MIN-Fehlergrenzen sowie anlagenspezifische Schwellwerte P, Z ebenso gespeichert werden können wie binäre Dämpfungswerte X1 und X2. Zu diesem Zweck sind in der Dämpfungsmeßschaltung 24 die für das Flußdiagramm der Fig. 3 erforderlichen Komponenten zweifach vorgesehen. Mit dem Begriff "Akku" wird im Rahmen der Fig. 3 und 4 jeweils der Zählwert Z1 oder Z2 repräsentiert.

Aus Fig. 3 erkennt man, daß die Zählwerte Z1, Z2 der Zähler 21, 22 jeweils dann als Minimumwerte MIN bzw. Maximumwerte MAX gespeichert werden, wenn sie kleiner oder größer sind als die vom vorherigen Meßvorgang noch gespeicherten Werte MIN bzw. MAX. Auf diese Weise kann erkannt werden, ob sich die Zählwerte Z1, Z2 seit der letzten Messung vergrößert oder verkleinert haben, d. h. ob sich das Dämpfungsblech 31 der betreffenden Spule 1, 3 genähert oder von ihr entfernt hat. Hierzu dienen zwei Vergleicher 41, 42.

Zwei weitere Vergleicher 49, 50 überwachen, ob die gespeicherten Minimumwerte MIN oder MAX eine anlagentypische Fehlergrenze FGmin bzw. FGmax überschritten haben. Falls ja, wird die Auswertung abgebrochen und ein neuer Meßzyklus gestartet.

Falls nein, wird in einem weiteren Vergleicher 53 festgestellt, ob die Zeitüberwachungsschaltung 29 einen Timeout gemeldet hat. Falls ja, wird der aktuelle Zählerstandswert Akku entsprechend Z1 bzw. Z2 als Maximumwert MAX und als Minimumwert MIN gespeichert und eine neue Messung gestartet.

Falls nein, wird in einem nächsten Vergleicher 52 geprüft, ob die Frequenzdrift DF des Meßoszillators Om eine anlagentypische Driftschwelle P überschritten hat. Falls ja, wird der aktuelle Zählwert Akku entsprechend Z1 bzw. Z2 als Minimumwert MIN oder als Maximumwert MAX gespeichert und eine neue Messung gestartet.

Falls nein, wird in einem weiteren Vergleicher 43 geprüft, ob der aktuelle Zählwert Akku eine adaptive Maximumgrenze "MAX - Z" unterschreitet. Falls ja, wird der binäre Dämpfungswert X1 bzw. X2 auf "TRUE" gesetzt. Dies bedeutet, daß die entsprechende Spule bedämpft, d. h. ihre Resonanzfrequenz hoch ist.

Falls nein, wird in einem weiteren Vergleicher 44 geprüft, ob der aktuelle Zählwert Akku eine adaptive Minimumgrenze "MIN + Z" überschreitet. Falls ja, wird der Dämpfungswert X1 bzw. X2 auf "FALSE" gesetzt. Dies bedeutet, daß die entsprechende Spule nicht bedämpft, ihre Resonanzfrequenz also niedrig ist.

Falls nein, wird eine neue Messung gestartet.

Fig. 4 zeigt das Flußdiagramm des Frequenzdriftdekoders 27. In einem Vergleicher 51 wird der aktuelle Referenzzählwert Zr verglichen mit dem seit der vorangegangenen Messung zwischengespeicherten Referenzzählwert Zralt. Wird eine Abweichung erkannt, wird ein Frequenzdriftwert DF als absolute Differenz der Referenzzähwerte Zr und Zralt errechnet. Gleichzeitig wird der aktuelle Referenzzählwert Zr als Zralt abgespeichert. Anschließend wird mit den Vergleichern 49, 50 überprüft, ob die gespeicherten Minimumwerte Min oder Maximumwerte Max die anlagentypischen Fehlergrenzen FGmin bzw. FGmax unter- bzw. überschritten haben. Falls ja, wird ein neuer Meßzyklus gestartet, falls nein eine neue Messung.

Dank der beschriebenen adaptiven Auswertung der Messungen wird das Maß der Bedämpfung der jeweils aktiven Spulen 1, 3 ermittelt, wobei der Referenzschwellwert Z, der zwischen bedämpfter, teilbedämpfter und nicht bedämpfter Spule unterscheidet, mit Hilfe einer Referenzmessung adaptiv eingestellt wird. Mit Hilfe der Referenzmessung wird ebenfalls die Frequenzdrift des Meßoszillators Om erkannt; übersteigt die Frequenzdrift DF den anlagentypischen Schwellwert P, wird die adaptive Auswertung aktualisiert. Langzeitdriften der diskreten Bauteile der erfindungsgemäßen Sensorschaltung, hervorgerufen durch Temperaturschwankungen und Veränderungen der Spannungsversorgung, werden auch bei längerem Stillstand der Welle 30 dank der Zeitüberwachungsschaltung 29 eliminiert. Die Meßgenauigkeit des induktiven Sensors ist allein abhängig von der Genauigkeit des Referenzoszillators Or und der von ihm erzeugten Referenzfrequenz fr.

## Patentansprüche

1. Induktiver Sensor zum exakten Messen der Drehzahl (n) einer Welle (30), auf der ein Dämpfungsblech (31) montiert ist, unter Verwendung einer Spule (1), die im Wirkungsbereich des Dämpfungsblechs (31) angeordnet ist, mittels eines Kondensators (2) zu einem LC-Schwingkreis (1, 2) ergänzt ist und mittels eines Pulses (P1) definierter Länge zu Resonanzschwingungen (Ua) angeregt wird,
gekennzeichnet durch die Merkmale:
- ein erster Schmitt-Trigger (7) wandelt die Sinus-Resonanzschwingungen (Ua) in Rechteckpulse (U1),
- ein Meßoszillator (Om) produziert hochfrequente Meßpulse (Pm),
- ein erster Zähler (21) zählt während der Zeitdauer von K (K = 1, 2, 3...) Rechteckpulsen (U1) die Meßpulse (Pm) bis zu einem Zählerstand 'Z1' ein,
- ein Referenzoszillator (Or) erzeugt eine hochgenaue Referenzfrequenz (fr), aus der eine hochgenaue Referenzdauer (T) abgeleitet ist,
- ein Referenzzähler (23) zählt während der Referenzdauer (T) die Meßpulse (Pm) bis zu einem Zählerstand 'Zr' ein,
- ein erster Vergleicher (41) vergleicht den Zählwert 'Z1' mit einem gespeicherten Maximumwert 'Max1' und speichert den jeweils höchsten Wert als Maximumwert 'Max1',
- ein zweiter Vergleicher (42) vergleicht den Zählwert 'Z1' mit einem gespeicherten Minimumwert 'Min1' und speichert den jeweils niedrigsten Wert als Minimumwert 'Min1',
- ein Schwellwertgenerator (26) bestimmt mit Hilfe einer vorprogrammierten Wertetabelle aus dem Zählerstand 'Zr' des Referenzzählers (23) einen schaltungstypischen Referenzschwellwert 'Z',
- ein dritter Vergleicher (43) vergleicht den Zählwert 'Z1' mit einem adaptiven Max-Schwellwert 'Max1 - Z',
-- beim Unterschreiten des Max-Schwellwertes wird ein Dämpfungswert 'X1 = TRUE' ausgegeben und der Zählwert 'Z1' als Minimumwert 'Min1' und als Maximumwert 'Max1' gespeichert,
-- andernfalls vergleicht ein vierter Vergleicher (44) den Zählwert 'Z1' mit einem adaptiven Min-Schwellwert 'Min1 + Z',
--- beim Überschreiten des Min-Schwellwertes wird ein Dämpfungswert 'X1 = FALSE' ausgegeben und der Zählwert 'Z1' als Minimumwert 'Min1' und als Maximumwert 'Max1' gespeichert,
- ein Dekoder (25) ermittelt aus der Abfolge der Dämpfungswerte 'X1' die Drehzahl (n) der Welle (30),
- worauf eine neue Messung gestartet wird.

2. Sensor nach Anspruch 1 zum Messen von Drehzahl (n) und Drehrichtung (Ri) der Welle (30), gekennzeichnet durch die Merkmale:
- es ist eine zweite Spule (3) vorgesehen, die mittels eines Kondensators (4) zu einem LC-Schwingkreis (3, 4) ergänzt ist und mittels eines Pulses (P2) definierter Länge zu Resonanzschwingungen (Ub) angeregt wird,
- das Dämpfungsblech (31) erstreckt sich über einen Winkel von 180 Grad,
- die beiden Spulen (1, 3) besitzen einen gegenseitigen Winkelabstand ungleich 180 Grad,
- ein zweiter Schmitt-Trigger (8) wandelt die Sinus-Resonanzschwingung (Ub) in Rechteckpulse (U2),
- ein zweiter Zähler (22) zählt während der Zeitdauer von ebenfalls K Rechteckpulsen (U2) die Meßpulse (Pm) bis zu einem Zählerstand 'Z2' ein,
- ein fünfter Vergleicher vergleicht den Zählwert 'Z2' mit einem gespeicherten Maximumwert 'Max2' und speichert den jeweils höchsten Wert als Maximumwert 'Max2',
- ein sechster Vergleicher vergleicht den Zählwert 'Z2' mit einem gespeicherten Minimumwert 'Min2' und speichert den jeweils niedrigsten Wert als Minimumwert 'Min2',
- ein siebter Vergleicher vergleicht den Zählwert 'Z2' mit einem adaptiven Max-Schwellwert 'Max2 - Z',
-- beim Unterschreiten des Max-Schwellwertes wird ein Dämpfungswert 'X2 = TRUE' ausgegeben und der Zählwert 'Z2' als Minimumwert 'Min2' und als Maximumwert 'Max2' gespeichert,
-- andernfalls vergleicht ein achter Vergleicher den Zählwert 'Z2' mit einem adaptiven Min-Schwellwert 'Min2 + Z',
--- beim Überschreiten des Min-Schwellwertes wird ein Dämpfungswert 'X2 = FALSE' ausgegeben, und der Zählwert 'Z2' als Minimumwert 'Min2' und als Maximumwert 'Max2' gespeichert,
- der Dekoder (25) ermittelt aus der Abfolge der Kombinationen der Dämpfungswerte 'X1' und 'X2' die Drehzahl (n) und die Drehrichtung (Ri) der Welle (30).

3. Sensor nach Anspruch 2, gekennzeichnet durch die Merkmale:
- es ist eine dritte Spule (5) vorgesehen, die mittels eines Kondensators (6) zu einem LC-Schwingkreis (5, 6) ergänzt ist und mittels eines Pulse (P3) definierter Länge zu Resonanzschwingungen (Uc) angeregt wird,
- die drei Spulen (1, 3, 5) sind symmetrisch um die Welle (30) herum angeordnet,
- ein Fehlerdetektor (10) erkennt das Ausbleiben der Rechteckpulse (U1, U2) des ersten oder zweiten LC-Schwingkreises (1, 2; 3, 4),
- ein Multiplexer (11) schaltet den dritten LC-Schwingkreis (5, 6) anstelle des defekten LC-Schwingkreises in die Meßschaltung.

4. Sensor nach Anspruch 1, 2 oder 3, gekennzeichnet durch die Merkmale:
- ein neunter Vergleicher (49) vergleicht den Minimumwert 'Min1' bzw. 'Min2' mit einer schaltungstypischen Min-Fehlergrenze 'FGmin',
-- beim Unterschreiten der Min-Fehlergrenze wird der gespeicherte Minimumwert 'Min1' bzw. 'Min2' auf einen größten Wert, z. B. 'FFFFh' gesetzt,
- ein zehnter Vergleicher (50) vergleicht den Maximumwert 'Max1' bzw. 'Max2' mit einer schaltungstypischen Max-Fehlergrenze 'FGmax',
-- beim Überschreiten der Max-Fehlergrenze wird der gespeicherte Maximumwert 'Max1' bzw. 'Max2' auf einen kleinsten Wert, z. B. '0000h' gesetzt,
- worauf ein neuer Meßzyklus gestartet wird.

5. Sensor nach einem der Ansprüche 1 bis 4, gekennzeichnet durch die Merkmale:
- ein elfter Vergleicher (51) vergleicht einen neuen Referenzzählerstand (Zr) mit dem zwischengespeicherten Alt-Referenzwert (Zralt),
-- bei einer Abweichung errechnet eine Rechenschaltung daraus die absolute Differenz DF = Zr - Zralt als Frequenzdriftwert (DF) des Meßoszillators (Om),
-- ein zwölfter Vergleicher (52) vergleicht den Frequenzdriftwert 'DF' mit einer schaltungstypischen Driftschwelle 'P',
-- beim überschreiten der Driftschwelle 'P' wird der Zählwert 'Z1' bzw. 'Z2' als Minimumwert 'Min1' bzw. 'Min2' und als Maximumwert 'Max1' bzw. 'Max2' gespeichert und der Frequendriftwert DF auf Null gesetzt,
- eine neue Messung wird gestartet.

6. Sensor nach einem der Ansprüche 1 bis 5, gekennzeichnet durch das Merkmal:
- der Meßoszillator (Om) ist ein auf einem Halbleiterchip integrierter Ringoszillator.

7. Sensor nach Anspruch 6, gekennzeichnet durch die Merkmale:
- eine Verzögerungsschaltung (28) schaltet die Pulse (Pm) des Meßoszillators (Om) erst nach einer definierten Verzögerungszeit (tv), abgeleitet von der Referenzfrequenz (fr), ein.

8. Sensor nach einem der Ansprüche 1 bis 7, gekennzeichnet durch das Merkmal:
- der Referenzoszillator (Or) ist ein quarzgesteuerter 32-kHz-Oszillator mit nachgeschaltetem Frequenzteiler.

9. Sensor nach einem der Ansprüche 1 bis 8, gekennzeichnet durch das Merkmal:
- ein Pulsgenerator (12) erzeugt die Anregungspulse (P1, P2, P3) und regelt die Pulsdauer auf ein Viertel der Periodendauer einer Resonanzschwingung (f1, f2, f3) der LC-Schwingkreise (1, 2; 3, 4; 5, 6).

10. Sensor nach einem der Ansprüche 1 bis 9, gekennzeichnet durch die Merkmale:
- eine Zeitüberwachungsschaltung (29) überwacht die Zeitabstände zwischen aufeinanderfolgenden Änderungen des Dämpfungswertes 'X1' bzw. 'X2',
- bei einem Timeout wird der Zählwert 'Z1' bzw. 'Z2' als Minimumwert 'Min1' bzw. 'Min2' und als Maximumwert 'Max1' bzw. 'Max2' gespeichert und eine neue Messung gestartet.

## Claims

1. Inductive sensor for accurately measuring the speed of rotation (n) of a shaft (30), on which a damping plate (31) is mounted, using a coil (1) which is disposed in the range of action of the damping plate (31), is completed by means of a capacitor (2) to form a LC resonant circuit (1, 2) and is excited by means of a pulse (P1) of a defined length into resonant oscillations (Ua),
characterised by the features:
- a first Schmitt trigger (7) converts the sinusoidal resonant oscillations (Ua) into rectangular pulses (U1),
- a measuring oscillator (Om) produces high-frequency measuring pulses (Pm),
- a first counter (21) counts during the time period of K (K = 1, 2, 3 ...) rectangular pulses (U1) the measuring pulses (Pm) up to a count 'Z1',
- a reference oscillator (Or) produces a highly accurate reference frequency (fr), from which a highly accurate reference period (T) is derived,
- a reference counter (23) counts during the reference period (T) the measuring pulses (Pm) up to a count 'Zr',
- a first comparator (41) compares the counted value 'Z1' with a stored maximum value 'Max1' and stores the respective highest value as the maximum value 'Max1',
- a second comparator (42) compares the counted value 'Z1' with a stored minimum value 'Min1' and stores the respective lowest value as the minimum value 'Min1',
- a threshold generator (26) determines a reference threshold 'Z' which is typical of the circuit from the count 'Zr' of the reference counter (23) by means of a preprogrammed value table,
- a third comparator (43) compares the counted value "Z1' with an adaptive maximum threshold 'Max1 - Z',
-- if the maximum threshold is not reached a damping value 'X1 = TRUE' is output and the counted value 'Z1' is stored as the minimum value 'Mini' and as the maximum value 'Max1'
-- otherwise a fourth comparator (44) compares the counted value 'Z1' with an adaptive minimum threshold 'Min1 + Z',
--- if the minimum threshold is exceeded a damping value 'X1 = FALSE' is output and the counted value 'Z1' is stored as the minimum value 'Min1' and as the maximum value 'Max1'
- a decoder (25) determines the speed of rotation (n) of the shaft (30) from the sequence of damping values 'X1',
- whereupon a new measurement is started.

2. Sensor according to claim 1 for measuring the speed of rotation (n) and the direction of rotation (Ri) of the shaft (30), characterised by the features:
- a second coil (3) is provided which is completed by means of a capacitor (4) to form a LC resonant circuit (3, 4) and is excited by means of a pulse (P2) of a defined length into resonant oscillations (Ub),
- the damping plate (31) extends over an angle of 180 degrees,
- the angular spacing of the two coils (1, 3) is not equal to 180 degrees,
- a second Schmitt trigger (8) converts the sinusoidal resonant oscillations (Ub) into rectangular pulses (U2),
- a second counter (22) likewise counts during the time period of K rectangular pulses (U2) the measuring pulses (Pm) up to a count 'Z2',
- a fifth comparator compares the counted value 'Z2' with a stored maximum value 'Max2' and stores the respective highest value as the maximum value 'Max2',
- a sixth comparator compares the counted value 'Z2' with a stored minimum value 'Min2' and stores the respective lowest value as the minimum value 'Min2',
- a seventh comparator compares the counted value 'Z2' with an adaptive maximum threshold 'Max2 - Z',
-- if the maximum threshold is not reached a damping value 'X2 = TRUE' is output and the counted value 'Z2' is stored as the minimum value 'Min2' and as the maximum value 'Max2',
-- otherwise an eighth comparator compares the counted value 'Z2' with an adaptive minimum threshold 'Min2 + Z',
--- if the minimum threshold is exceeded a damping value 'X2 = FALSE' is output and the counted value 'Z2' is stored as the minimum value 'Min2' and as the maximum value 'Max2',
- the decoder (25) determines the speed of rotation (n) and the direction of rotation (Ri) of the shaft (30) from the sequence of the combination of the damping values 'X1' and 'X2'.

3. Sensor according to claim 2, characterised by the features:
- a third coil (5) is provided which is completed by means of a capacitor (6) to form a LC resonant circuit (5, 6) and is excited by means of a pulse (P3) of a defined length into resonant oscillations (Uc),
- the three coils (1, 3, 5) are disposed symmetrically about the shaft (30),
- an error detector (10) detects the absence of the rectangular pulses (U1, U2) from the first or second LC resonant circuit (1, 2; 3, 4),
- a multiplexer (11) connects the third LC resonant circuit (5, 6) into the measuring circuit instead of the defective LC resonant circuit.

4. Sensor according to claim 1, 2 or 3, characterised by the features:
- a ninth comparator (49) compares the minimum value 'Min1' or 'Min2' respectively with a minimum error limit 'FGmin' which is typical of the circuit,
-- if the minimum error limit is not reached the stored minimum value 'Min1' or 'Min2'respectively is set to a maximum value, e. g. 'FFFFh',
- a tenth comparator (50) compares the maximum value 'Max1' or 'Max2' respectively with a maximum error limit 'FGmax' which is typical of the circuit,
-- if the maximum error limit is exceeded the stored maximum value 'Max1' or 'Max2' is set to a minimum value, e.g. '0000h',
- whereupon a new measuring cycle is started.

5. Sensor according to one of claims 1 to 4, characterised by the features:
- an eleventh comparator (51) compares a new reference count (Zr) with the temporarily stored previous reference value (Zralt),
-- should there be a variation a computing circuit calculates from this the absolute difference DF = Zr - Zralt as the frequency drift value (DF) of the measuring oscillator (Om),
-- a twelfth comparator (52) compares the frequency drift value 'DF' with a drift threshold 'P' which is typical of the circuit,
-- if the drift threshold "P" is exceeded the counted value 'Z1' or 'Z2' respectively is stored as the minimum value 'Min1' or 'Min2' respectively and as the maximum value 'Max1' or 'Max2' respectively and the frequency drift value DF is set to zero,
- a new measurement is started.

6. Sensor according to one of claims 1 to 5, characterised by the feature:
- the measuring oscillator (Om) is a ring oscillator which is integrated on a semiconductor chip.

7. Sensor according to claim 6, characterised by the features:
- a delay circuit (28) only connects the pulses (Pm) of the measuring oscillator (Om) after a defined delay time (tv), derived from the reference frequency (fr).

8. Sensor according to one of claims 1 to 7, characterised by the feature:
- the reference oscillator (Or) is a crystal-controlled 32 kHz oscillator with a frequency divider connected downstream.

9. Sensor according to one of claims 1 to 8, characterised by the feature:
- a pulse generator (12) generates the excitation pulses (P1, P2, P3) and regulates the pulse width to a quarter of the cycle time of a resonant oscillation (fl, f2, f3) of the LC resonant circuits (1, 2; 3, 4; 5, 6).

10. Sensor according to one of claims 1 to 9, characterised by the features:
- a time monitoring circuit (29) monitors the time intervals between successive changes in the damping value 'X1' or 'X2',
- should there be a time-out the counted value 'Z1' or 'Z2' is stored as the minimum value 'Min1' or 'Min2' and as the maximum value 'Max1' or 'Max2' and a new measurement is started.

## Revendications

1. Capteur inductif pour la mesure exacte du régime(n) d'un arbre (30), sur lequel est montée une tôle d'amortissement (31), avec l'utilisation d'une bobine (1) qui est disposée dans la zone d'action de la tôle d'amortissement (31), qui est complétée par un condensateur (2) pour constituer un circuit oscillant LC (1, 2) et qui est excitée par une impulsion (P1) de longueur définie pour obtenir des oscillations de résonance (Ua), caractérisé en ce qu'un premier déclencheur de Schmitt (7) transforme les oscillations de résonance (Ua) sinusoïdales en impulsions rectangulaires (U1) ; un oscillateur de mesure (Om) produit des impulsions de mesure (Pm) à haute fréquence ; un premier compteur (21) enregistre pendant la durée de K (K = 1, 2, 3...) impulsions rectangulaires (U1) les impulsions de mesure (Pm) jusqu'à une position de compteur 'Z1' ; un oscillateur de référence (Or) produit une fréquence de référence (fr) très précise de laquelle est déduite une durée de référence (T) très précise ; un compteur de référence (23) enregistre pendant la durée de référence (T) les impulsions de mesure (Pm) jusqu'à une position de compteur 'Zr' ; un premier comparateur (41) compare la valeur de comptage 'Z1' avec une valeur maximale mémorisée 'Max1' et mémorise à chaque fois la valeur la plus élevée comme valeur maximale 'Max1' ; un deuxième comparateur (42) compare la valeur de comptage 'Z1' avec une valeur minimale mémorisée 'Min1' et mémorise à chaque fois la valeur la plus basse comme valeur minimale 'Min1'; un générateur de valeur seuil (26) détermine à l'aide d'un tableau de valeurs préprogrammées, à partir de la position 'Zr' du compteur de référence (23), une valeur seuil de référence 'Z' caractéristique du circuit; un troisième comparateur (43) compare la valeur de comptage 'Z1' avec une valeur seuil maximale 'Max1 - Z' adaptative ; si la valeur seuil maximale est dépassée vers le bas,une valeur d'amortissement 'X1=TRUE' est éditée et la valeur de comptage 'Z1' est mémorisée comme valeur minimale 'Min1' et comme valeur maximale 'Max1' ; sinon, un quatrième comparateur (44) compare la valeur de comptage 'Z1' avec une valeur seuil minimale 'Min1+Z' adaptative ; si la valeur seuil minimale est dépassée, une valeur d'amortissement 'X1 = FALSE' est éditée et la valeur de comptage 'Z1' est mémorisée comme valeur minimale 'Min1' et comme valeur maximale 'Max1' ; un décodeur (25) détermine à partir de la séquence des valeurs d'amortissement 'X1' le régime (n) de l'arbre (30) ; après quoi une nouvelle mesure est déclenchée.

2. Capteur selon la revendication 1 pour mesurer le régime(n) et le sens de rotation (Ri) de l'arbre (30), caractérisé en ce que 1' on prévoit une deuxième bobine (3) qui est complétée par un condensateur (4) pour constituer un circuit oscillant LC (3, 4) et qui est excitée par une impulsion (P2) de longueur définie pour obtenir des oscillations de résonance (Ub) ; la tôle d'amortissement (31) s'étend sur un angle de 180 degrés ; les deux bobines (1, 3) ont un intervalle angulaire différent de 180 degrés ; un deuxième déclencheur de Schmitt (8) transforme l'oscillation de résonance sinusoïdale (Ub) en impulsions rectangulaires (U2) ; un deuxième compteur (22) enregistre pendant la même durée de K impulsions rectangulaires (U2) les impulsions de mesure (Pm) jusqu'à une position de compteur '22' ; un cinquième comparateur compare la valeur de comptage 'Z2' avec une valeur maximale mémorisée 'Max2' et mémorise à chaque fois la valeur la plus élevée comme valeur maximale 'Max2' ; un sixième comparateur compare la valeur de comptage 'Z2' avec une valeur minimale mémorisée 'Min2' et mémorise à chaque fois la valeur la plus basse comme valeur minimale 'Min2' ; un septième comparateur compare la valeur de comptage 'Z2' avec une valeur seuil maximale 'Max2 - Z' adaptative ; si la valeur seuil maximale est dépassée vers le bas, une valeur d'amortissement 'X2=TRUE' est éditée et la valeur de comptage 'Z2' est mémorisée comme valeur minimale 'Min2' et comme valeur maximale 'Max2' ; sinon, un huitième comparateur compare la valeur de comptage 'Z2' avec une valeur seuil minimale 'Min2+Z' adaptative ; si la valeur seuil minimale est dépassée, une valeur d'amortissement 'X2 = FALSE' est éditée et la valeur de comptage 'Z2' est mémorisée comme valeur minimale 'Min2' et comme valeur maximale 'Max2' ; le décodeur (25) détermine à partir de la séquence des combinaisons des valeurs d'amortissement 'X1' et 'X2' le régime(n) et le sens de rotation (Ri) de l'arbre (30).

3. Capteur selon la revendication 2, caractérisé en ce que l'on prévoit une troisième bobine (5) qui est complétée par un condensateur (6) pour constituer un circuit oscillant LC (5, 6) et qui est excitée par une impulsion (P3) de longueur définie pour obtenir des oscillations de résonance (Uc) ; les trois bobines (1, 3, 5) sont disposées de façon symétrique autour de l'arbre (30) ; un détecteur d'erreur (10) détecte l'absence des impulsions rectangulaires (U1, U2) du premier ou du deuxième circuit oscillant LC (1, 2; 3, 4) ; un multiplexeur (11) commute le troisième circuit oscillant LC (5, 6) au lieu du circuit oscillant LC défectueux dans le circuit de mesure.

4. Capteur selon la revendication 1, 2 ou 3, caractérisé en ce qu' un neuvième comparateur (49) compare la valeur minimale 'Min1' ou 'Min2' avec une limite d'erreur minimale 'FGmin' caractéristique du circuit ; si la limite d'erreur minimale est dépassée vers le bas, la valeur minimale mémorisée 'Min1' ou 'Min2' est amenée à une valeur maximale, par exemple 'FFFFh' ; un dixième comparateur (50) compare la valeur maximale 'Max1' ou 'Max2' avec une limite d'erreur maximale 'FGmax' caractéristique du circuit ; si la limite d'erreur maximale est dépassée, la valeur maximale mémorisée 'Max1' ou 'Max2' est amenée à une valeur très basse, par exemple '0000h' ; après quoi un nouveau cycle de mesure est déclenché.

5. Capteur selon l'une quelconque des revendications 1 à 4, caractérisé en ce qu' un onzième comparateur (51) compare une nouvelle position de compteur de référence (Zr) avec l'ancienne valeur de référence (Zralt) mémorisée de façon temporaire ; dans le cas d'un écart, un circuit de calcul en déduit la différence absolue DF = Zr - Zralt comme valeur de déviation de fréquence (DF) de l'oscillateur de mesure (Om) un douzième comparateur (52) compare la valeur de déviation de fréquence 'DF' avec un seuil de déviation 'P' caractéristique du circuit; si le seuil de déviation 'P' est dépassé, la valeur de comptage 'Z1' ou 'Z2' est mémorisée comme valeur minimale 'Min1' ou 'Min2' et comme valeur maximale 'Max1' ou 'Max2', et la valeur de déviation de fréquence DF est amenée à zéro ; une nouvelle mesure est déclenchée.

6. Capteur selon l'une quelconque des revendications 1 à 5, caractérisé en ce que l'oscillateur de mesure (Om) est un oscillateur annulaire intégré sur une puce à semiconducteurs.

7. Capteur selon la revendication 6, caractérisé en ce qu' un circuit de temporisation (28) enclenche les impulsions (Pm) de l'oscillateur de mesure (Om) seulement après un délai de temporisation (tv) défini, déduit de la fréquence de référence (fr).

8. Capteur selon l'une quelconque des revendications 1 à 7, caractérisé en ce que l'oscillateur de référence (Or) est un oscillateur de 32 kHz commandé par cristal, équipé d'un diviseur de fréquence placé en aval.

9. Capteur selon l'une quelconque des revendications 1 à 8, caractérisé en ce qu' un générateur d'impulsions (12) produit les impulsions d'excitation (P1, P2, P3) et règle la durée d'impulsion sur un quart de la durée de période d'une oscillation de résonance (f1, f2, f3) des circuits oscillants LC (1, 2; 3, 4; 5, 6).

10. Capteur selon l'une quelconque des revendications 1 à 9, caractérisé en ce qu' un circuit de contrôle de temps (29) contrôle les intervalles de temps entre des modifications consécutives de la valeur d'amortissement 'X1' ou 'X2' ; en cas de dépassement de temps, la valeur de comptage 'Z1' ou 'Z2' est mémorisée comme valeur minimale 'Min1'ou'Min2' et comme valeur maximale 'Max1' ou 'Max2', et une nouvelle mesure est déclenchée.
